# EUROPÄISCHE PATENTSCHRIFT

(11) **EP 2 274 391 B1**
(45) Veröffentlichungstag und Bekanntmachung des Hinweises auf die Patenterteilung: **11.06.2014**
(21) Anmeldenummer: 09738226.1
(22) Anmeldetag: 30.04.2009
(51) Int. Cl.: C09J 7/00

(54) **TRENNFOLIE AUS POLYOLEFIN UND VERWENDUNG DERSELBEN**
POLYOLEFIN SEPARATION FILM, AND USE THEREOF
FILM DE SÉPARATION EN POLYOLÉFINE ET SON UTILISATION

(30) Priorität: 30.04.2008 DE 102008021842
(43) Veröffentlichungstag der Anmeldung: 19.01.2011
(73) Patentinhaber: TESA SE, 20253 Hamburg (DE)
(72) Erfinder: MÜSSIG, Bernhard, 21218 Seevetal (DE); BEHRENS, Nicole, 81245 München (DE)
(86) Internationale Anmeldenummer: PCT/EP2009/055288
(87) Internationale Veröffentlichungsnummer: WO 2009/133182

(56) Entgegenhaltungen:
- EP-A- 1 004 632
- WO-A-03/015678
- WO-A-2007/075724
- WO-A-2008/115371
- WO-A-2009/015261
- WO-A-2009/032184
- US-A1- 2007 054 080

## Beschreibung

Die Erfindung betrifft eine Trennfolie aus einem zumindest einlagigen Folienkörper, auf dem zumindest einseitig eine Releaseschicht aufgebracht ist.

Klebebänder, die ein- oder beidseitig mit Klebstoffen beschichtet sind, werden am Ende des Herstellungsprozesses zumeist zu einer Rolle in Form einer archimedischen Spirale aufgewickelt. Um bei doppelseitig klebenden Klebebändern zu verhindern, dass die Klebemassen miteinander in Kontakt kommen, oder um bei einseitig klebenden Klebebändern eine Verklebung der offenen Klebemassenseite auf der Trägerrückseite zu verhindern, wird ein Abdeckmaterial auf die offene Klebemasse zukaschiert, das anschließend zusammen mit dem Klebeband aufgewickelt wird. Dem Fachmann sind derartige Abdeckmaterialien unter den Namen Liner bekannt. Neben der Abdeckung von ein- oder doppelseitig klebenden Klebebändern werden Liner auch zur Eindeckung von Etiketten eingesetzt.

Ein Liner (Trennpapier, Trennfolie) ist nicht Bestandteil eines Klebebandes oder Etiketts, sondern nur ein Hilfsmittel zu deren Herstellung oder Lagerung oder er dient als Hilfsmittel für die Weiterverarbeitung des Klebebands/des Etiketts beispielsweise in Stanzverfahren. Darüber hinaus ist ein Liner im Gegensatz zu einem Klebebandträger nicht fest mit einer Klebstoffschicht verbunden.

In der Regel handelt es sich bei Linern um Trennpapiere (Papiere mit ein- oder beidseitiger Silikonbeschichtung).

In geringem Umfang werden auch Polyester-, Polypropylen- und Polyethylenfolien mit Silikonbeschichtung eingesetzt. Liner auf Folienbasis - insbesondere die Polyolefinfolien werden durch Blas- oder Flachfolienextrusion hergestellt - werden von dem Fachmann für selbstklebende Produkte als Trennfolien bezeichnet.

Liner finden im Herstellprozess von Klebebändern (Beschichtung von Haftklebstoff auf den Liner, Trocknung, Übertragung des trockenen Klebstoffs auf ein Substrat und Entfernung des Liners) Verwendung. Der Liner kann auch zur Lagerung (zum Beispiel bei doppelseitigen Klebebändern) dienen. Der Liner deckt die Haftklebstoffschicht ab und wird vor dem Verkleben in der Applikation entfernt.

Für viele Anwendungen im Bereich der Weiterverarbeitung (so genannte Converting-Anwendungen), wie zum Beispiel die Herstellung von Stanzlingen, können keine Trennpapiere eingesetzt werden, weil sie sich bei Feuchtigkeitsschwankungen nicht dimensionsstabil verhalten und weiterhin die Dickentoleranzen oft zu hoch sind. Weiterhin haften nach dem Stanzvorgang an den Schneidkanten des Klebebandes aus dem Trennpaper stammende Papierfasern, was für Hygiene- und Elektronikanwendungen des Stanzlings, zum Beispiele Stanzlinge zur Montage von Flachbildschirmen oder Mobiltelefonen, nicht akzeptabel ist.
Für solche Anwendungen werden heutzutage 50 oder 75 µm dicke silikonisierte Polyesterfolien eingesetzt. Sie weisen die genannten Nachteile der Trennpapiere zwar nicht auf, sind jedoch relativ teuer und praktisch nur in farblos erhältlich.

Wird ein doppelseitig klebendes, mit einem Liner ausgerüstetes Klebeband abgerollt und mit der offenen, also linerfreien Klebemassenseite auf einen unebenen Untergrund (wie zum Beispiel gewölbte oder geprägte Oberflächen, Rohre oder Bleche mit Sicken oder Nieten) aufgeklebt, lässt es sich in der Regel nicht faltenfrei applizieren.
Für eine faltenfreie Applizierbarkeit müssen sowohl Klebeband als auch Liner dehnbar sein, für die Verklebung auf unebenen Untergründen werden daher unter anderem Liner aus weichem dehnbarem Polyethylen (LDPE) eingesetzt. Diese weisen allerdings zwei erhebliche Schwächen auf.
Zum einen wird das Silikon während des Aufbringens auf den Liner aufgrund der zwingend erforderlichen niedrigen Temperatur (bedingt durch den niedrigen Erweichungspunkt der Basisfolie) nicht vollständig ausgehärtet, was das Verbleiben von niedrigmolekularem Silikon auf der Oberfläche des Liners und durch einen anschließenden Übertrag auf den Haftklebstoff eine Reduzierung der Klebkraft des darauf befindlichen Haftklebstoffs zur Folge hat. Des Weiteren kann die Trennfolie nicht direkt mit Klebstoff beschichtet werden, daher müssen die Klebstoffschicht beziehungsweise die Klebstoffschichten erst auf einen Hilfsliner aufgetragen (zum Beispiel eine silikonisierte Polyesterfolie) und dann durch Kaschierung auf den LDPE-Liner übertragen werden. Dieser Schritt ist nicht nur arbeitsaufwändig, darüber hinaus fällt der Hilfsliner als Abfall an.
Lösungsmittelhaftkleber lassen sich aufgrund der Lösungsmittelempfindlichkeit und der Wärmebeständigkeit der PE-Folie nicht direkt beschichten. Bei einer Srhmelzhaft-kleberbeschichtung kommt es bei einem unvorhergesehenen Maschlnenhalt zu einem Durchschmelzen der Trennfolie, was zu unerwünschten Abrissen führt.

Um diesen Nachteilen zu begegnen, kann die Temperaturbeständigkeit von Polyethylen erhöht werden, nämlich indem ein Rohstoff höherer Dichte wie MDPE oder HDPE einsetzt wird, nachteiligerweise wird dadurch jedoch die erforderliche Dehnbarkeit auf einen Bruchteil reduziert.

Die WO 2009/032184 A offenbart ein transdermales Pflaster, welches einen Liner enthält, der vorzugsweise aus Polyester besteht, aber auch ein nicht näher beschriebenes Polyethylen enthalten kann. Eine Kombination aus zwei Polyethylenen ist nicht beschrieben.

Die WO 2009/015261 A zeigt ein Laminat mit guten optischen Eigenschaften, enthaltend einen Liner. Eine Kombination aus zwei Polyethylenen ist nicht beschrieben, sondern eine Mischung aus Polyethylen mit Polyester (boPET) oder Polypropylen, wie der Tabelle 1 entnommen werden kann.

Die WO 2008/115371 A beschreibt ein transdermales Pflaster, welches einen Liner enthält, der auch aus Polyethylen oder aus einer Kombination aus Polyethylen und einem Polyester bestehen kann. Eine Kombination aus zwei Polyethylenen ist nicht beschrieben.

Die WO 2007/075724 A betrifft ein doppelseitiges Klebeband mit einem in zwei Schichten spaltbaren Liner mit Releaseaußenschichten. Die Linerfolien der Beispiele enthalten auf der einen Seite Flexathene TP38NC01X01 und auf der anderen Seite. Flexathene TP38NC01X01 ist ein Propylenpolymer mit einer Dichte von 0,90 g/cm³ und einem Biegemodul von 655 MPa. Petrothene 951 ist ein konventionelles LDPE mit einer Dichte von 0,919 g/cm³.

Die US 2007/054080 A offenbart ein Substrat für einen Liner, der aus Folien, Papieren etc. besteht. Es wird allgemein auch ein Polyethylen erwähnt.

Die WO 03/0156678 A zeigt ein transdermales Pflaster, welches auch einen Liner enthält, der aus PET, Polystyrol oder Polypropylen bestehen kann. Polyethylen ist lediglich als eine der möglichen Rohstoffe für eine Membran erwähnt, um die Drogenfreisetzung zu steuern.

Mit der EP 1 004 632 A ist eine Silikonzusammensetzung bekannt geworden, die zu gehärteten Trennschichten führen kann. Aus den Beispielen geht hervor, dass es sich um konventionelle, nicht näher beschriebene polyethylenbeschichtete Papiere handelt. Diese Polyethylenschichten aus LDPE oder HDPE dienen dazu, das Paper bei Feuchtigkeitsschwankungen dimensionsstabil zu halten.

Aufgabe der Erfindung ist es, eine Trennfolie zur Verfügung zu stellen, die gut dehnbar ist, die eine hinreichende Wärmebeständigkeit sowohl für die Releasebeschichtung als auch für die Direktbeschichtung mit Haftklebstoff aufweist und die die genannten Nachteile des Standes der Technik nicht aufweist.

Gelöst wird diese Aufgabe für den Fachmann überraschend und nicht vorhersehbar durch eine Trennfolie, wie sie im Hauptanspruch näher gekennzeichnet ist. In den Unteransprüchen sind vorteilhafte Ausführungsformen der Erfindung beschrieben. Des Weiteren ist die Verwendung der erfindungsgemäßen Trennfolie vom Erfindungsgedanken umfasst.

Demgemäß betrifft die Erfindung eine Trennfolie aus einem zumindest einlagigen Folienkörper, in dem eine Basisfolie vorhanden ist, auf der sich gegebenenfalls weitere Schichten befinden, wobei zumindest einseitig eine Releaseschicht auf dem Folienkörper aufgebracht ist:

Die Basisfolie enthält ein Ethylenpolymer A mit einer Dichte zwischen 0,86 und 0,89 g/cm³ und einem Kristallitschmelzpunkt von mindestens 105 °C sowie ein Ethylenpolymer B mit einer Dichte von mindestens 0,90 g/cm³.

Unter dem Begriff Ethylenpolymer wird erfindungsgemäß ein Homo- oder Copolymer verstanden, dessen gewichtsmäßige Hauptkomponente aus Ethylen besteht.

Die Releaseschicht beziehungsweise die Releaseschichten bedecken die außenliegenden Seiten des Folienkörpers.

Der Anteil an Ethylenpolymer A bezogen auf die gesamte Menge an Polyethylenpolymeren in der Basisfolie beträgt gemäß einer bevorzugten Ausführungsform der Erfindung 20 bis 80 Gew.-%.

Vorzugsweise besteht die Basisfolie nur aus den Ethylenpolymeren A und B und weiter vorzugsweise weist die Basisfolie dann eine Mischung der beiden Polyethylenpolymere A und B im Verhältnis von 1:4 bis 4:1 auf.

Die Verwendung eines ethylenbasierten lonomers verbessert die Handeinreißbarkeit der Basisfolie. Dies drückt sich auch in deutlich reduzierten Werten der Elmendorf Tear Strength (ASTM D 1922) aus. Gemäß einer weiteren bevorzugten Ausführungsform der Erfindung enthält die Basisfolie daher ein ethylenhaltiges lonomer.
Auf diese Weise kann ein mit der erfindungsgemäßen Trennfolie eingedecktes Klebeband bei Applikation des Klebebandes von Hand abgelängt werden, ermöglicht also den Verzicht auf den Gebrauch von Messern oder Scheren.

Die mechanischen Eigenschaften der erfindungsgemäßen Trennfolie liegen in MD (Maschinenrichtung) bevorzugt in den folgenden Bereichen:
- Kraft bei 10 %-Dehnung zwischen 3 und 30 N/cm, vorzugsweise zwischen 7 und 18 N/cm,
- Bruchdehnung von 50 bis 800 %, bevorzugt von 200 bis 400 % und/oder
- Bruchkraft im Bereich von 10 bis 50 N/cm, bevorzugt von 15 bis 35 N/cm.

Gemäß einer weiteren bevorzugten Ausführungsform der Erfindung beträgt die Dicke des Folienkörpers 45 bis 200 µm, vorzugsweise 75 bis 125 µm.

Der Folienkörper weist auf einer, vorzugsweise auf beiden Seiten, eine Releaseschicht auf. Dafür kommen die bekannten Releasemittel (gegebenenfalls mit weiteren Polymeren abgemischt) in Frage. Beispiele sind Stearyl-Verbindungen (zum Beispiel Polyvinylstearylcarbamat, Stearylverbindungen von Übergangsmetallen wie Cr oder Zr, Harnstoffe aus Polyethylenimin und Stearylisocyanat), Polysiloxane (zum Beispiel als Copolymer mit Polyurethanen oder Polyharnstoffen oder als Propfcopolymer auf Polyolefin), thermoplastische Fluorpolymere. Bevorzugt sind Polysiloxane mit Strahlen-, Kondensations- oder Additionsvernetzung. Besonders bevorzugt sind Vinylpolydimethylsiloxane vernetzt mit Methylhydrogensiloxanen in Gegenwart eines platinhaltigen Katalysators.
Die Releaseschicht kann durch ein Beschichtungsverfahren aufgebracht werden, möglich ist erfindungsgemäß auch die Coextrusion der Releaseschichten mit dem Folienkörper.

Bei einer lösungsmittelhaltigen Releaselösung liegt der Auftrag der Releaseschicht vorzugsweise im Bereich zwischen 0,2 und 0,8 g/m². Wird das Releasemittel lösungsmittelfrei aufgetragen, liegt der Auftrag vorzugsweise im Bereich zwischen 1,0 und 3 g/m².

Die mit der Releaseschicht zu versehenden Folienseiten des Folienkörpers werden vorzugsweise zur besseren Haftung an der Oberfläche vorbehandelt. Dies kann durch chemische Beschichtungen oder Behandlungen aus der Gasphase (zum Beispiel fluorhaltige Gase) oder durch physikalische Prozesse wie Flamm- oder Plasma- und insbesondere Coronabehandlung erfolgen.

Weiter vorzugsweise sind auf der Basisschicht genau eine oder vorzugsweise beidseitig zwei coextrudierte Außenschichten aus Polymeren mit im Vergleich zur Basisschicht (vorzugsweise Innenschicht) höherer Kristallinität vorhanden, die eine Verblockung der Trennfolie beim Aufwickeln derselben verhindern. Die Außenschichten sind dabei unter der oder den Releaseschichten angeordnet, also zwischen Basisfolie und Release.

Für die Außenschicht(en) werden vorzugsweise ein Polyethylen mit einer Dichte von mindestens 0,90 g/cm³, bevorzugt mindestens 0,92 g/cm³ und optional ein Füllstoff (Antiblockmittel) eingesetzt. Ein weiterer Bestandteil der Außenschicht kann zur Verbesserung der Handeinreißbarkeit ein PE-Ionomer sein. Üblich ist eine Dicke der Außenschicht(en) von ungefähr 5 bis 20 % der Dicke der Kernschicht, sprich des Folienkörpers.

Erfindungsgemäß bevorzugt ist, wenn der Biegemodul des Ethylenpolymers A unter 90 MPa liegt und gleichzeitig der Biegemodul des Ethylenpolymers B mindestens 90 MPa beträgt.

Der bevorzugte Schmelzindex der Ethylenpolymere A und B liegt jeweils unter 10 g/10 min.

Es hat sich als vorteilhaft herausgestellt, wenn die Dichte des Ethylenpolymers A zwischen 0,86 und 0,88 g/cm³ liegt und/oder der Kristallitschmelzpunkt mindestens 115 °C beträgt. Besonders vorteilhaft ist eine Dichte des Ethylenpolymers A zwischen 0,86 und 0,87 g/cm³.
Weiter vorzugsweise enthält das Ethylenpolymer A ein C₃- bis C₁₀-Olefin, insbesondere 1-Octen als Comonomer.
Besonders bevorzugt ist der Schmelzindex des Ethylenpolymers A zwischen 2 und 10 g/10 min.

Gemäß einer weiteren bevorzugten Ausführungsform der Erfindung beträgt die Dichte des Ethylenpolymers B mindestens 0,92 g/cm³, bevorzugt 0,94 g/cm³.
Beispiele für das Ethylenpolymer B sind LLDPE, HDPE, MDPE, Metallocen-PE, EVA, EBA und EMA, insbesondere bevorzugt MDPE und HDPE. Bevorzugt werden auch Ethylenpolymere mit breiter oder bimodaler Molekulargewichtsverteilung. Aufgrund der Schmelzestabilität dieser Polymere wird so ein stabiler Blasprozess erreicht.

Weitere Polyolefine oder übliche Additive wie Füllstoffe, Pigmente, Alterungsschutzmittel, Nukleierungsmittel, Impactmodifier oder Gleitmittel können bei der Herstellung der Ethylenpolymere A und B verwendet werden.

Der Folienkörper beziehungsweise, sofern dieser einschichtig ist, die Basisfolie, die beide als Basis zur Herstellung der Trennfolie dienen, können durch Kalandrieren oder vorzugsweise durch Extrusion, insbesondere durch Blasextrusion hergestellt werden.

Die Richtung, in die der Folienkörper die Herstellmaschine verlässt, wird als Maschinenrichtung bezeichnet. Selbst wenn die Trennfolie später gestanzt oder geschnitten in Abschnitten vorliegt, ist die Maschinenrichtung weiterhin eindeutig festgelegt und bestimmbar.

Die erfindungsgemäße Trennfolie kann zur Herstellung von Etiketten oder Klebebändern eingesetzt werden.
Sie kann mit einem beidseitig klebenden Haftklebstoff beschichtet oder kaschiert werden (ein so genanntes trägerloses Klebeband). Das mit der erfindungsgemäßen Trennfolie einzudeckende Klebeband kann zusätzlich einen Träger enthalten, zum Beispiel ein dünnes Papier (Tissue), eine Folie, ein Gewebe, ein Polyolefinschaum oder ein Vlies. Vorzugsweise ist das Klebeband doppelseitig klebend und enthält besonders bevorzugt einen Träger aus dünnen Papier, Vlies oder Schaum.

Geeignete Haftkleber sind bei D. Satas, Handbook of Pressure Sensitive Adhesive Technology (3. Auflage, 1999, Van Nostrand Reinhold) beschrieben. Insbesondere sind Haftkleber auf Basis Acrylat, Naturkautschuk, thermoplastischem Styrolblockcopolymer, Polyisobutylen oder Silikon geeignet. Bevorzugt sind Acrylathaftkleber, sie können als Dispersion, Hotmelt oder aus Lösung aufgetragen sein. Zur Optimierung der Eigenschaften kann die zum Einsatz kommende Selbstklebemasse mit einem oder mehreren Additiven wie Klebrigmachern (Harzen), Weichmachern, Füllstoffen, Pigmenten, UV-Absorbern, Lichtschutz-, Alterungsschutzmitteln, Vernetzungsmitteln, Vernetzungspromotoren oder Elastomeren abgemischt sein. Die Klebstoffschicht kann durch Wärme oder energiereiche Strahlen vernetzt sein.

Die Beschichtungsstärke der Klebemasse auf dem Klebebandträger liegt je Seite vorzugsweise im Bereich von 18 bis 200 g/m², insbesondere 40 bis 120 g/m². Ist das Klebeband trägerlos, so liegt die Beschichtungsstärke der Klebemasse auf der Trennfolie vorzugsweise im Bereich von 36 bis 400 g/m², insbesondere 80 bis 240 g/m².

Der allgemeine Ausdruck "Klebeband" umfasst im Sinne dieser Erfindung alle flächigen Gebilde wie in zwei Dimensionen ausgedehnte Folien oder Folienabschnitte, Bänder mit ausgedehnter Länge und begrenzter Breite, Bandabschnitte, Stanzlinge, Etiketten und dergleichen.

Die erfindungsgemäße Trennfolie ist besonders vorteilhaft, wenn ein doppelseitiges Klebeband, dessen eine Klebemasse mit der Trennfolie eingedeckt ist, abgerollt und samt der Trennfolie mit der offenen Klebemassenseite auf unebenen Untergründen verklebt wird. Aufgrund ihrer mechanischen Eigenschaften ist das Klebeband faltenfrei applizierbar.

### Prüfmethoden

Die Messungen werden bei einem Prüfklima von 23 ± 1 °C und 50 ± 5 % rel. Luftfeuchte durchgeführt.

Die Dichte der Polymeren wird nach ISO 1183 ermittelt und in g/cm³ ausgedrückt.

Der Schmelzindex wird nach ISO 1133 bei 190 °C und 2,16 kg geprüft und in g/10 min ausgedrückt.

Der Kristallitschmelzpunkt (T_{cr}) wird durch Dünnschichtchromatographie (DSC) bei einer Aufheizrate von 10 °C/min nach ISO 3146 ermittelt.

Der Biegemodul (flexural modulus) ist nach ASTM D 790 (Sekantenmodul bei 2 % Dehnung) zu bestimmen.

Das Zugdehnungsverhalten der Trennfolie wird an Prüflingen vom Typ 2 (rechteckige, 150 mm lange und (nach Möglichkeit) 15 mm breite Prüfstreifen) nach DIN EN ISO 527-3/2/300 mit einer Prüfgeschwindigkeit von 300 mm/min, einer Einspannlänge von 100 mm und einer Vorkraft von 0,3 N/cm ermittelt, wobei Muster zur Ermittlung der Daten mit scharfen Klingen zugeschnitten werden.
Das Zugdehnungsverhalten wird in Maschinenrichtung (MD, Laufrichtung) geprüft. Die Kraft wird in N/Streifenbreite (in cm) und die Bruchdehnung in % ausgedrückt.

Die Handeinreißbarkeit lässt sich schwer in Zahlen ausdrücken, auch wenn Bruchkraft, Bruchdehnung und Schlagzugzähigkeit (längs gemessen) von wesentlichem Einfluss sind. Die Trennfolie wird sowohl quer zwischen zwei Paaren aus Daumen und Zeigefingerspitzen durchgerissen, als auch nach Beendigung einer Applikation in Längsrichtung ruckartig abgerissen.

### Bewertung:

| | | |
|---|---|---|
| • ++ | = | gut |
| • + | = | noch verarbeitbar |
| • - | = | schwer verarbeitbar |
| • -- | = | nur mit hohem Kraftaufwand abreißbar, die Enden sind unsauber |

Die Beurteilung des Verblockens des Folienkörpers erfolgt nach 4 Wochen Lagerung bei 23 °C. Es wird geprüft, ob sich die Folie
- leicht (+)
- schwer (0) oder
- nicht mehr (-)
abziehen lässt.

Die Dicke des Folienkörpers der Trennfolie wird nach DIN 53370 ermittelt.

Im Folgenden soll die Erfindung anhand von Beispielen erläutert werden, ohne diese dadurch einzuschränken.

### Beispiele

### Inhalt:

Beschreibung der Beispiele
Tabellarische Zusammenstellung der Ergebnisse der Beispiele
Beschreibung der Vergleichsbeispiele
Tabellarische Zusammenstellung der Ergebnisse der Vergleichsbeispiele

### Beispiel 1

Auf einer Blasfolienanlage wird eine Folie mit folgendem Rezepturaufbau hergestellt (Schichtaufbau in der Folie ist dann 1, 2 ,3):
Schicht 1, 18 µm:

| | |
|---|---|
| 25 Gew.% | LD 251 (LDPE von Exxonmobil, Schmelzindex 8 g/10min, Dichte 0,9155 g/cm³, Biegemodul 180 MPa, Kristallitschmelzpunkt 104 °C) |
| 75 Gew.% | Novex M21 E760 (PE-Ionomer mit Zn-Ionen von Ineos, Schmelzindex 0,5 g/10min, Dichte 0,933 g/cm³, Kristallitschmelzpunkt 107 °C, Biegemodul 200 MPa) |

Schicht 2, 34 µm:

| | |
|---|---|
| 78 Gew.-% | IN FUSE D9507 (Polyethylen aus Ethylen und Octen von Dow, Dichte 0,866 g/cm³, Schmelzindex 5 g/10 min, Biegemodul 14 MPa, Kristallitschmelzpunkt 120 °C) |
| 17 Gew.-% | Hostalen GD9555 (HDPE von BaseII, Dichte 0,953 g/cm³, Kristallitschmelzpunkt 132 °C, Biegemodul 1050 MPa, Schmelzindex 0,9 g/10 min) |
| 5 Gew.-% | Plasblack PE 1851 (Rußbatch von Cabot) |

Schicht 3, 18 µm:
wie Schicht 1

Die Schicht 2 weist die erfindungsgemäße Zusammensetzung auf.

Der erhaltene Folienkörper wird auf beiden Seiten mit Corona behandelt und anschließend 4 Wochen bei 23 °C gelagert. Beim Abwickeln wird auf Verblockung geprüft.

Anschließend wird der Folienkörper jeweils mit einer Lösung einer Mischung aus
- 96,5 Gew.-Teilen Dehesive 914 (Vinylpolydimethylsiloxan von Wacker Silicones),
- 2,5 Gew.-Teilen Crosslinker V24 (Methylhydrogenpolysiloxan von Wacker Silicones) und
- 1 Gew.-Teil Catalyst OL (Katalysator in Polydimethylsiloxan von Wacker Silicones)
beschichtet, und die Beschichtung anschließend in einem Wärmekanal ausgehärtet.

Die fertige Trennfolie wird danach mit einem Acrylathotmeltklebstoff beschichtet, und zwar mit einem Masseauftrag von 100 g/m², wobei der Acrylathotmeltklebstoff die folgende Zusammensetzung aufweist:
8 kg Acrylsäure
48 kg NTBAM (N-t-butylacrylamid)
8 kg Maleinsäureanhydrid
368 kg 2-Ethylhexylacrylat
368 kg n-Butylacrylat
600 kg Aceton/Isopropanol (97:3)
400 g + 400 g Vazo 67® (2,2'-Azo-bis(2-ethylpropionsäurenitril von Firma DuPont) Das genaue Verfahren zur Herstellung dieser Klebemasse kann den Beispielen der DE 101 45 229 A1 entnommen werden.

Anschließend wird ein Tissue von 15 g/m² (TS Tape Paper von Toyota Tsuho Corporation) zur Klebemassenschicht kaschiert und alles zur Rolle gewickelt.

In einem zweiten Arbeitsgang wird dieses Vormaterial abgewickelt und analog erneut mit einer Haftklebemasse beschichtet, diesmal jedoch auf der klebemassefreien Seite des Tissues, dann zur Mutterrolle gewickelt und geschnitten.

Das abgewickelte Klebeband lässt sich samt der Trennfolienabdeckung mit der offenen Klebemassenseite ohne Falten auf unebenen Oberflächen applizieren.

### Beispiel 2

Auf einer Blasfolienanlage wird eine Folie in 150 µm Dicke aus 33 Gew.-% IN FUSE D9507 und 67 Gew.-% LD 251 hergestellt. Die erhaltene Basisfolie wird auf beiden Seiten mit Corona behandelt und anschließend vier Wochen bei 23 °C gelagert. Beim Abwickeln wird auf Verblockung geprüft.

Anschließend wird die die Folie jeweils mit einer Lösung einer Mischung aus
96,8 Gew.-Teilen SL 6670 (Vinylpolydimethylsiloxan mit Platin-Katalysator GE Silicones) und
3,2 Gew.-Teilen SS 4300 C (Methylhydrogenpolysiloxan GE Silicones) beschichtet, und die Beschichtung anschließend in einem Wärmekanal ausgehärtet.

Als Klebemasse wird auf die fertige Trennfolie eine Acrylatlösungsmittelklebemasse, beispielsweise Rikidyne BDF 505 (Sankyo Chemical), unter Zugabe von Desmodur Z 4470 MPA/X (aliphatisches Polyisocyanat der Firma Bayer MaterialScience), und zwar 1 Gewichtsteil auf 100 Gewichtsteile Klebemasse Trockengehalt gerechnet, mit 50 g/m² aufgetragen.
Auf die Klebemasse wird eine LDPE-Folie (LDPE Film 16000 red 100, Flächengewicht 15 g/m², Hersteller Huhtamaki) zukaschiert.

In einem zweiten Arbeitsgang wird dieses Vormaterial abgewickelt und erneut mit einer Klebemasse beschichtet, diesmal jedoch auf der klebemassefreien Seite der LDPE-Folie, dann zur Mutterrolle gewickelt und geschnitten.

Das abgewickelte Klebeband lässt sich samt der Trennfolienabdeckung mit der offenen Klebemassenseite ohne Falten auf unebenen Oberflächen applizieren.

### Eigenschaften der Beispiele

| | **Beispiel 1** | **Beispiel 2** |
|---|---|---|
| Foliendicke [mm] | 0,07 | 0,15 |
| Kraft bei 10 % Dehnung [N/cm] | 11 | 11 |
| Handeinreißbarkeit | ++ | + |
| Verblocken der Folie | + | 0 |

### Vergleichsbeispiel 1

Die Herstellung erfolgt gemäß Beispiel 1, jedoch wird IN FUSE D9507 durch Hostalen GD9555 ersetzt.

Das erhaltene Klebeband lässt sich auf unebenen Untergründen nicht ohne Falten applizieren.

### Vergleichsbeispiel 2

Die Herstellung der Basisfolie erfolgt gemäß Beispiel 2, jedoch wird LD 251 durch IN FUSE D9507 ersetzt.

Die Folie lässt sich schon im Frischzustand schwer abwickeln.

### Vergleichsbeispiel 3

Die Herstellung der Basisfolie erfolgt gemäß Beispiel 2, jedoch werden LD 251 und IN FUSE D9507 durch Exact 0203 (weiches LLDPE aus Ethylen und Octen von DexPlastomers, Dichte 0,902 g/cm³, Schmelzindex 3 g/10 min, Biegemodul 70 MPa, Kristallitschmelzpunkt 95 °C).

Die Folie lässt sich schon im Frischzustand schwer abwickeln.

### Vergleichsbeispiel 4

Als Trennfolie wird eine LDPE-Folie (LDPE Film 16000 red 100) von Huhtamaki eingesetzt. Die Beschichtung erfolgt analog Beispiel 1.

Beim Anhalten reißt die Folie durch Schmelzen. Bei Beschichtung analog Beispiel 2 schrumpft die Trennfolie stark, und das Produkt ist schon nach der ersten Klebstoffbeschichtung stark wellig. Bei Absenkung der Trocknungstemperatur wird die Klebstoffbeschichtung nicht hinreichend trocken.

### Eigenschaften der Vergleichsbeispiele:

| | **Vergleichsbeispiel 1** | **Vergleichsbeispiel 2** | **Vergleichsbeispiel 3** | **Vergleichsbeispiel 4** |
|---|---|---|---|---|
| Foliendicke [mm] | 0,07 | 0,15 | 0,15 | 0,09 |
| Kraft bei 10 % Dehnung [N/cm] | 33 | 1,3 | 5,0 | 11 |
| Handeinreißbarkeit | + | - | - | - |
| Verblocken der Folie | + | - | - | unbekannt |

Die erfindungsgemäße Trennfolie weist nicht die genannten Nachteile von Trennpapieren, verstreckten Trennfolien oder Polyethylen-Trennfolien auf.

## Patentansprüche

1. Trennfolie aus einem zumindest einlagigen Folienkörper, in dem eine Basisfolie vorhanden ist, auf der sich gegebenenfalls weitere Schichten befinden, wobei zumindest einseitig eine Releaseschicht auf dem Folienkörper aufgebracht ist,
**dadurch gekennzeichnet, dass**
die Basisfolie ein Ethylenpolymer A mit einer Dichte zwischen 0,86 und 0,89 g/cm³ und einem Kristallitschmelzpunkt von mindestens 105 °C sowie ein Ethylenpolymer B mit einer Dichte von mindestens 0,90 g/cm³ enthält.

2. Trennfolie nach Anspruch 1,
**dadurch gekennzeichnet dass**
der Anteil an Ethylenpolymer A bezogen auf die gesamte Menge an Polyethylenpolymeren in der Basisfolie 20 bis 80 Gew. % beträgt.

3. Trennfolie nach Anspruch 1 oder 2,
**dadurch gekennzeichnet, dass**
die Basisfolie nur aus den Ethylenpolymeren A und B besteht und vorzugsweise das Verhältnis der beiden Polyethylenpolymere A und B dann 1:4 bis 4:1 ist.

4. Trennfolie nach zumindest einem der Ansprüche 1 bis 3,
**dadurch gekennzeichnet, dass**
die Basisfolie ein ethylenhaltiges lonomer enthält.

5. Trennfolie nach zumindest einem der vorhergehenden Ansprüche,
**dadurch gekennzeichnet, dass**
die mechanischen Eigenschaften der Trennfolie in MD (Maschinenrichtung) in den folgenden Bereichen liegen:
• Kraft bei 10 %-Dehnung zwischen 3 und 30 N/cm, vorzugsweise zwischen 7 und 18 N/cm,
• Bruchdehnung von 50 bis 800 %, bevorzugt von 200 bis 400 % und/oder
• Bruchkraft im Bereich von 10 bis 50 N/cm, bevorzugt von 15 bis 35 N/cm

6. Trennfolie nach zumindest einem der vorhergehenden Ansprüche,
**dadurch gekennzeichnet, dass**
die Dicke des Folienkörpers 45 bis 200 µm, vorzugsweise 75 bis 125 µm beträgt.

7. Trennfolie nach zumindest einem der vorhergehenden Ansprüche,
**dadurch gekennzeichnet, dass**
auf der Basisschicht genau eine oder vorzugsweise beidseitig zwei coextrudierte Außenschichten vorhanden sind, die eine Verblockung der Trennfolie verhindern.

8. Trennfolie nach zumindest einem der vorhergehenden Ansprüche,
**dadurch gekennzeichnet, dass**
der Biegemodul des Ethylenpolymers A unter 90 MPa liegt und gleichzeitig der Biegemodul des Ethylenpolymers B mindestens 90 MPa beträgt und/oder der Schmelzindex der Ethylenpolymere A und B jeweils unter 10 g/10 min liegt.

9. Trennfolie nach zumindest einem der vorhergehenden Ansprüche,
**dadurch gekennzeichnet, dass**
das Ethylenpolymer A ein C₃- bis C₁₀-Olefin, insbesondere 1-Octen als Comonomer enthält, die Dichte des Ethylenpolymers A zwischen 0,86 und 0,88 g/cm³, bevorzugt zwischen 0,86 und 0,87 g/cm³, liegt, der Schmelzindex des Ethylenpolymers A zwischen 2 und 10 g/10 min liegt und/oder der Kristallitschmelzpunkt mindestens 115 °C beträgt.

10. Trennfolie nach zumindest einem der vorhergehenden Ansprüche,
**dadurch gekennzeichnet, dass**
die Dichte des Ethylenpolymers B mindestens 0,92 g/cm³, bevorzugt 0,94 g/cm³ beträgt.

11. Trennfolie nach zumindest einem der vorhergehenden Ansprüche,
**dadurch gekennzeichnet, dass**
mindestens eine der gegebenenfalls vorhandenen zwei Releasebeschichtungen ein Silikon, vorzugsweise Vinylpolydimethylsiloxan enthält.

12. Verwendung einer Trennfolie nach zumindest einem der vorherigen Ansprüche zur Eindeckung der Klebeschicht eines ein- oder doppelseitig klebenden Klebebands, Klebebandstanzlings oder Etiketts.

13. Verwendung einer Trennfolie nach Anspruch 12,
**dadurch gekennzeichnet, dass**
die Klebeschichtung auf Acrylat basisiert.

## Claims

1. Release film made of an at least single-layer film structure in which there is a base film present, on which, if appropriate, there are further layers located, where a release layer has been applied to at least one side of the film structure,
**characterized in that**
the base film comprises an ethylene polymer A with a density of from 0.86 to 0.89 g/cm³ and with a crystallite melting point of at least 105°C, and also an ethylene polymer B with a density of at least 0.90 g/cm³.

2. Release film according to Claim 1,
**characterized in that**
the proportion of ethylene polymer A, based on the entire amount of polyethylene polymers, in the base film, is from 20 to 80% by weight.

3. Release film according to Claim 1 or 2,
**characterized in that**
the base film is composed only of the ethylene polymers A and B, and it is preferable that the ratio of the two polyethylene polymers A and B is then from 1:4 to 4:1.

4. Release film according to at least one of Claims 1 to 3,
**characterized in that**
the base film comprises an ethylene-containing ionomer.

5. Release film according to at least one of the preceding claims,
**characterized in that**
the mechanical properties of the release film in MD (machine direction) are within the following ranges:
• force at 10% tensile strain from 3 to 30 N/cm, preferably from 7 to 18 N/cm,
• tensile strain at break from 50 to 800%, preferably from 200 to 400%, and/or
• breaking force within the range from 10 to 50 N/cm, preferably from 15 to 35 N/cm.

6. Release film according to at least one of the preceding claims,
**characterized in that**
the thickness of the film structure is from 45 to 200 µm, preferably from 75 to 125 µm.

7. Release film according to at least one of the preceding claims,
**characterized in that**
present on the base layer there is precisely one, or preferably bilaterally two coextruded external layers, which inhibit blocking of the release film.

8. Release film according to at least one of the preceding claims,
**characterized in that**
the flexural modulus of the ethylene polymer A is below 90 MPa and simultaneously the flexural modulus of the ethylene polymer B is at least 90 MPa, and/or the melt index of the ethylene polymers A and B is respectively below 10 g/10 min.

9. Release film according to at least one of the preceding claims,
**characterized in that**
the ethylene polymer A comprises, as comonomer, a C₃-C₁₀ olefin, in particular 1-octene, the density of the ethylene polymer A is from 0.86 to 0.88 g/cm³, preferably from 0.86 to 0.87 g/cm³, the melt index of the ethylene polymer A is from 2 to 10 g/10 min, and/or the crystallite melting point is at least 115°C.

10. Release film according to at least one of the preceding claims,
**characterized in that**
the density of the ethylene polymer B is at least 0.92 g/cm³, preferably 0.94 g/cm³.

11. Release film according to at least one of the preceding claims,
**characterized in that**
at least one of the optionally present two release coatings comprises a silicone, preferably vinyl-polydimethylsiloxane.

12. Use of a release film according to at least one of the preceding claims for covering the adhesive layer of a label, punched-out adhesive-tape section, or adhesive tape which is adhesive on one or both sides.

13. Use of a release film according to Claim 12,
**characterized in that**
the adhesive layer is based on acrylate.

## Revendications

1. Feuille de séparation constituée par un corps de feuille au moins monocouche, une feuille de base étant présente sur laquelle se trouvent le cas échéant d'autres couches, une couche antiadhésive étant appliquée au moins sur une face sur le corps de feuille, **caractérisée en ce que** la feuille de base contient un polymère d'éthylène A d'une densité entre 0,86 et 0,89 g/cm³ et un point de fusion des cristaux d'au moins 105°C ainsi qu'un polymère d'éthylène B d'une densité d'au moins 0,90 g/cm³.

2. Feuille de séparation selon la revendication 1, **caractérisée en ce que** la proportion de polymère d'éthylène A, par rapport à la quantité totale de polymères de polyéthylène dans la feuille de base, est de 20 à 80% en poids.

3. Feuille de séparation selon la revendication 1 ou 2, **caractérisée en ce que** la feuille de base n'est constituée que des polymères d'éthylène A et B et le rapport des deux polymères de polyéthylène A et B est alors de préférence de 1:4 à 4:1.

4. Feuille de séparation selon au moins l'une quelconque des revendications 1 à 3, **caractérisée en ce que** la feuille de base contient un ionomère contenant de l'éthylène.

5. Feuille de séparation selon au moins l'une quelconque des revendications précédentes, **caractérisée en ce que** les propriétés mécaniques de la feuille de séparation dans le sens MD (sens de la machine) se situent dans les plates suivantes :
- force à un allongement de 10% entre 3 et 30 N/cm, de préférence entre 7 et 18 N/cm,
- allongement à la rupture de 50 à 800%, de préférence de 200 à 400% et/ou
- force de rupture dans la plage de 10 à 50 N/cm, de préférence de 15 à 35 N/m.

6. Feuille de séparation selon au moins l'une quelconque des revendications précédentes, **caractérisée en ce que** l'épaisseur du corps de feuille est de 45 à 200 µm, de préférence 75 à 125 µm.

7. Feuille de séparation selon au moins l'une quelconque des revendications précédentes, **caractérisée en ce qu'**exactement une ou de préférence, des deux côtés, deux couches extérieures coextrudées sont présentes sur la couche de base, qui empêchent une adhérence de la feuille de séparation.

8. Feuille de séparation selon au moins l'une quelconque des revendications précédentes, **caractérisée en ce que** le module de flexion du polymère d'éthylène A est inférieur à 90 MPa et simultanément, le module de flexion du polymère d'éthylène B vaut au moins 90 MPa et/ou l'indice de fusion du polymère d'éthylène A et B est à chaque fois inférieur à 10 g/10 min.

9. Feuille de séparation selon au moins l'une quelconque des revendications précédentes, **caractérisée en ce que** le polymère d'éthylène contient une C₃-C₁₀-oléfine, en particulier le 1-octène, comme comonomère, la densité du polymère d'éthylène A est situé entre 0,86 et 0,88 g/cm³, de préférence entre 0,86 et 0,87 g/cm³, l'indice de fusion du polymère d'éthylène A est situé entre 2 et 10 g/10 min et/ou le point de fusion des cristaux est d'au moins 115°C.

10. Feuille de séparation selon au moins l'une quelconque des revendications précédentes, **caractérisée en ce que** la densité du polymère d'éthylène B est d'au moins 0,92 g/cm³, de préférence de 0,94 g/cm³.

11. Feuille de séparation selon au moins l'une quelconque des revendications précédentes, **caractérisée en ce qu'**au moins un des revêtements antiadhésifs le cas échéant présents contient un silicone, de préférence le vinylpolydiméthylsiloxane.

12. Utilisation d'une feuille de séparation selon au moins l'une quelconque des revendications précédentes pour recouvrir la couche adhésive d'une bande adhésive, d'une pièce découpée d'une bande adhésive ou d'une étiquette, monoface ou double face.

13. Utilisation d'une feuille de séparation selon la revendication 12, **caractérisée en ce que** le revêtement adhésif est à base d'acrylate.
